Europäisches Patentamt

European Patent Office

Office européen des brevets

(19)

(11)  EP 0 763 709 B1

(12)  EUROPÄISCHE PATENTSCHRIFT

(45) Veröffentlichungstag und Bekanntmachung des Hinweises auf die Patenterteilung:
**30.10.2002  Patentblatt 2002/44**

(51) Int Cl.⁷: **G01B 5/008**, G01B 5/012, G01B 5/00

(21) Anmeldenummer: **96113891.4**

(22) Anmeldetag: **30.08.1996**

(54) **Koordinatenmessgerät, dessen Taster über mehrere Drehachsen beweglich gelagert ist**

Coordinate measuring machine with a measuring head movable about several axes

Machine de mesure de coordonnées à tête de mesure tournante autour de plusieurs axes

(84) Benannte Vertragsstaaten:
**DE FR GB IT**

(30) Priorität: **16.09.1995  DE 19534425**

(43) Veröffentlichungstag der Anmeldung:
**19.03.1997  Patentblatt 1997/12**

(73) Patentinhaber:
• **Carl Zeiss**
**89518 Heidenheim (Brenz) (DE)**
Benannte Vertragsstaaten:
**DE FR IT**
• **Carl-Zeiss-Stiftung, trading as Carl Zeiss**
**89518 Heidenheim (Brenz) (DE)**
Benannte Vertragsstaaten:
**GB**

(72) Erfinder:
• **Brenner, Kurt**
**74589 Satteldorf (DE)**
• **Seitz, Karl**
**73447 Oberkochen (DE)**

(56) Entgegenhaltungen:
**US-A- 4 282 688      US-A- 4 815 213**
**US-A- 5 095 632**

**Beschreibung**

Die Erfindung betrifft ein Koordinatenmeßgerät, dessen Taster über hintereinandergeschaltete Drehachsen beweglich gelagert ist. Derartige handgeführte Koordinatenmeßgeräte, bei denen der Taster durch die Bedienperson je nach Anzahl und Lage der Dreh- bzw. Schwenkachsen mehr oder minder frei im Raum oder in einer Ebene leichtgängig geführt und auf das zu vermessende Werkstück aufgesetzt wird, sind an sich bekannt und beispielsweise in der US-PS 5 402 582 und in der US-PS 5 396 712 beschrieben.

Bei Koordinatenmeßgeräten diesen Typs müssen die Abstände der Drehachsen voneinander sehr genau bekannt sein, da diese Abstände neben den Drehwinkeln, die in den Drehachsen angeordnete Encoder liefern, die Position des Tasters im Raum bestimmen. Gleiches gilt für den Abstand der letzten Drehachse zur Position des Tasters bzw. zur Achse des Taststifts, an dem die Tastkugel befestigt ist.

Einen großen Einfluß auf die Meßgenauigkeit dieser Geräte hat außerdem die Temperatur, da sich über die thermische Längenausdehnung der die Gelenke verbindenden Arme der Abstand der Gelenkachsen ändern kann. Aus diesem Grund besitzt das in der erstgenannten US-PS 5 402 582 beschriebene Gerät, das überwiegend aus Aluminium aufgebaut ist, Temperatursensoren, um über eine Temperaturmessung die thermische Längenausdehnung zu erfassen. Die Lage der Tastkugel im Raum kann dann über eine entsprechende Korrekturrechnung unter Einbeziehung der von den Temperatursensoren gelieferten Signale korrigiert werden.

Diese Lösung ist jedoch wegen der erforderlichen zusätzlichen Sensoren und Rechenoperationen aufwendig und störanfällig.

Bei dem in der US-PS 5 396 712 beschriebenen Gerät wird darauf hingewiesen, daß die beweglichen Teile beispielsweise aus einem Kohlefaserverstärkten Kunststoff (CFK) bestehen können, das eine sehr geringe Masse bei hoher Stabilität des Aufbaus mit gleichzeitiger Unempfindlichkeit gegen thermische Effekte verbindet. Allerdings besitzt CFK keinen vernachlässigbaren thermischen Ausdehnungskoeffizienten. Dieser ist vielmehr anisotrop, d.h. er hängt von der Ausrichtung der Fasern ab bzw. davon, wie das betreffende Bauteil bezüglich der Fasern gewickelt oder geschnitten ist. Abhängig davon liegt der thermische Ausdehnungskoeffizient von CFK zwischen ca. $-3 \cdot 10^{-6}$/K und ca. $+23 \cdot 10^{-6}$/K, was bei Hebellängen von einem Meter in einem Temperaturintervall von $10°$ Längenänderungen zwischen -30 und +230µm bedeutet. Dieser Beitrag zur Meßunsicherheit ist dann, wenn höhere Anforderungen an die Meßgenauigkeit gestellt werden, durchaus signifikant.

Es ist deshalb die Aufgabe der vorliegenden Erfindung ein Koordinatenmeßgerät der eingangs genannten Art zu schaffen, bei dem der Abstand der Drehachsen zueinander in einem großen Temperaturbereich möglichst konstant bleibt.

Diese Aufgabe wird mit den im Kennzeichen des Anspruchs 1 angegebenen Maßnahmen gelöst.

Gemäß der Erfindung bestehen die Bauteile des Geräts, die den Abstand der Drehachsen zueinander bestimmen, aus verschiedenen Materialien mit positiven und negativen thermischen Ausdehnungskoeffizienten und/oder die Bauteile, die den Abstand einer Drehachse zur Tasterachse bestimmen aus verschiedenen Materialien mit positiven und negativen thermischen Ausdehnungskoeffizienten. Auf diese Weise läßt sich durch geeignete Wahl der wirksamen Längen in Richtung der Achsabstände und der Materialien erreichen, daß die Abstände nur geringfügig bzw. im Rahmen der Meßgenauigkeit des Geräts vernachlässigbare thermische Längenänderungen erfahren, d.h. daß die Geometrie des Geräts über einen weiten Temperaturbereich konstant bleibt. Auf zusätzliche Temperatursensoren kann deshalb verzichtet werden.

Zweckmäßig besteht mindestens eines der Bauteile aus einem faserverstärkten Kunststoff, vorzugsweise Kohlefaserverstärktem Kunststoff (CFK), der in Richtung der Achsabstände einen negativen thermischen Ausdehnungskoeffizienten besitzt. Das läßt sich beispielsweise dadurch erreichen, indem man die betreffenden Bauteile in entsprechender Orientierung aus dem Material schneidet, oder, wenn die Bauteile individuell polymerisiert werden, die den Kunststoff verstärkenden Fasern in der erforderlichen Orientierung wickelt.

Weitere Vorteile der Erfindung ergeben sich aus der nachfolgenden Beschreibung eines Ausführungsbeispiels anhand der Figuren 1 - 3 der beigefügten Zeichnungen.

Figur 1    ist eine vereinfachte perspektivische Darstellung der beweglichen Teile eines Koordinatenmeßgeräts mit hintereinander geschalteten Drehachsen;

Figur 2    zeigt den die Drehachsen (6,8) verbindenden Schenkel (5a) aus Figur 1 in vergrößertem Maßstabe in der Ansicht in Richtung der Tasterlängsachse;

Figur 3    ist eine Ansicht auf die die Drehachse (8) und die Tasterlängsachse (10) verbindenden Bauteile des KMG aus Figur 1 in vergrößertem Maßstabe, ebenfalls in Richtung der Tasterlängsachse (10).

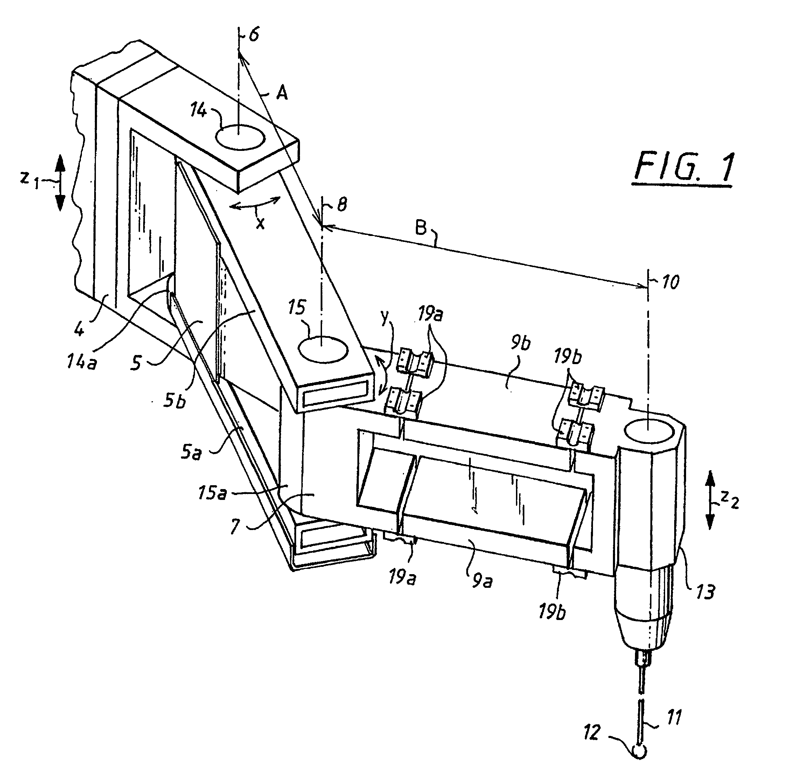

Bei der Beschreibung der Figur 1 gehen wir aus von einem Koordinatenmeßgerät des Typs wie es beispielsweise in der eingangs genannten US-PS 5 396 712 und der dazu korrespondierenden DE 42 38 139 A1 beschrieben ist, auf die an dieser Stelle voll inhaltlich Bezug genommen wird. Nicht dargestellt in der Figur 1 sind das Maschinenbett dieses Gerätes mit dem Werkstücktisch und der vertikalen z-Säule, an der ein gabelförmiger Träger (4) aus Stahl motorisch in Richtung des mit (Z1) bezeichneten Pfeils vertikal nachgeführt werden kann.

In die beiden Schenkel des Trägers (4) sind die Lager für eine die Schenkel verbindende Welle (14) eingesetzt, die eine erste vertikale Drehachse (6) definiert. Um diese Achse (6) läßt sich wie durch den Pfeil (X) angedeutet ein an der Welle (14) befestigter erster Arm (5) in der Waagerechten verschwenken. Das zur Erfassung der Schwenkbewegung erforderliche Winkelmeßsystem ist hier der Übersichtlichkeit halber nicht dargestellt. Der Schwenkarm (5) ist ebenfalls gabelförmig ausgebildet, wobei die Enden der Zinken (5a) und (5b) des gabelförmigen Schwenkarms wieder die Lager für eine zweite Welle (15) tragen. Diese Welle definiert die zweite Drehachse (8), die einen Abstand (A) zur ersten Drehachse (6) besitzt und zu dieser parallel ausgerichtet ist. Um die Achse (8) ist ein an der Welle (15) befestigter zweiter Schwenkarm wie durch den Pfeil (Y) veranschaulicht drehbar. Dieser zweite Schwenkarm besteht aus drei Teilen und ist in Form eines Federparallelogrammes ausgebildet, um den an seinem vorderen Ende angeordneten Träger (13) für den Taster des Gerätes manuell in der Vertikalen auslenken zu können, wie das durch den Pfeil (Z2) angedeutet ist. Der Taster trägt an seiner Unterseite einen nachgiebig gelagerten Taststift (11) mit Tastkugel (12).

Realisiert ist das Federparallelogramm durch zwei parallel angeordnete Schenkel (9a) und (9b), deren Enden durch je vier paarweise nebeneinander liegende Gelenkfedern (19a) und (19b) einmal mit der Ober- bzw. Unterseite des Trägers (13) und einmal mit dem Teil (7) verbunden sind, das zwischen den Schenkeln (5a) und (5b) des ersten Schwenkarms an der Welle (15) gelagert ist.

Für das koordinatenmäßige Vermessen von Werkstücken mit diesem Gerät ist es nun besonders wichtig, daß die Abstände (A) und (B) zwischen den beiden Drehachsen (6) und (8) sowie der Drehachse (8) und der Taststiftlängsachse (10) während des Meßbetriebs konstant bleiben, da von diesen Längen die möglichst genau zu berechnende Position der Tastkugel (12) abhängt. Um das auch für einen größeren Temperaturbereich zu gewährleisten, sind folgende Maßnahmen ergriffen worden:

Wie aus der vergrößerten Aufsicht auf die Unterseite des ersten Schwenkarms (5) hervorgeht, besteht der Schenkel (5a) des Schwenkarms aus Kohlefaserverstärktem Kunststoff (CFK), dessen Fasern so liegen bzw. ausgerichtet sind, daß sich in Richtung der die Achsen (6,8) verbindenden Strecke (A) ein thermischer Ausdehnungskoeffizient $\alpha 1 = -0,8 \cdot 10^{-6}\ K^{-1}$ ergibt. Die für die thermische Ausdehnung maßgebliche effektive Länge dieses Teils (5a) beträgt 237,7 mm. Dagegen besteht die Welle (14) ebenso wie das Teil (4) aus Stahl mit einem thermischen Ausdehnungskoeffizienten $\alpha 2$ von ca. $10 \cdot 10^{-6}\ K^{-1}$. Dadurch ist sichergestellt, daß sich die Welle und die Lager bei Temperaturänderungen nicht gegenseitig verspannen und somit keine die Lager zerstörenden Kräfte auf dieses einwirken. Die effektive Länge L2, mit der die Welle (14) zur Längenausdehnung des Schwenkarms beiträgt, ist 7,1 mm.

Das Teil (14a), mit dem die Welle (14) an dem CFK-Teil (5a) befestigt ist, besteht aus Aluminium mit einem thermischen Ausdehnungskoeffizienten von $24 \cdot 10^{-6}\ K^{-1}$ und trägt effektiv mit einer Länge L3 = 5,2 mm zur thermischen Längenausdehnung bei. Am anderen Ende des Teils (5a) sind die Lager für die Welle (15) eingesetzt, die aus Keramikmaterial besteht, das aber an dieser Stelle was den Abstand (A) zwischen den Achsen (6) und (8) bzw. deren thermische Längenausdehnung anbetrifft jedoch nicht zu berücksichtigen ist, da der Lagermittelpunkt unabhängig von der Materialart von Lager und Welle zentrisch bleibt.

Für die thermische Längendehnung l1' des Abstands (A) ergibt sich deshalb:

$$l1' = \alpha 1 \cdot L1 + \alpha 2 \cdot L2 + \alpha 3 \cdot L3 \tag{1}$$

was für das beschriebene Beispiel bedeutet:

$$l1' = (237,7 \cdot -0,8 + 7,1 \cdot 10 + 5,2 \cdot 24)\ 10^{-6}\ mm\ K^{-1} =$$

$$5,64 \cdot 10^{-6}\ mm\ K^{-1}. \tag{2}$$

Daraus ist ersichtlich, daß sich der Abstand (A) selbst über einen Temperaturbereich von 30 K nur um ca. 0,16μm ändert. Diese geringfügige Änderung ist im Rahmen der Meßgenauigkeit des in Figur 1 dargestellten Gerätes völlig vernachlässigbar.

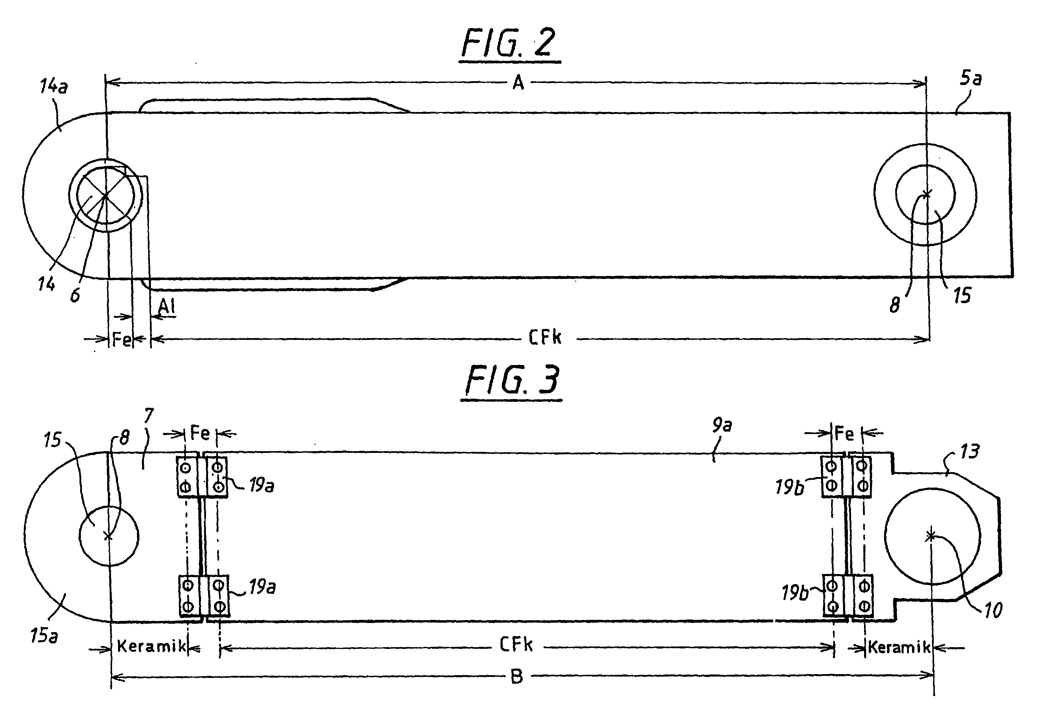

Beim zweiten, in Figur 3 skizzierten Gelenkarm sind die Verhältnisse ähnlich. Hier ist der thermische Ausdehnungskoeffizient $\alpha 4$ der Welle (15) aus Keramikmaterial zu berücksichtigen, der $1,5 \cdot 10^{-6}\ K^{-1}$ beträgt. Das Teil (7), das die Welle (15) umgibt, besteht ebenfalls aus diesem Keramikmaterial. Für die thermische Längenausdehnung des Abstands (B) zwischen der Drehachse (8) und der Tasterachse (10) ist für das Teil (7) der Abstand L4 zwischen dem Mittelpunkt der Welle (15) und den Befestigungspunkten der Biegefedern (19a) am Teil (7) zu berücksichtigen. Dieser Abstand L4 beträgt 23,6 mm. Der Tasterhalter (13) besteht ebenfalls aus diesem Keramikmaterial und besitzt eine effektive, für die thermische Ausdehnung zu berücksichtigende Länge L14 von 20,5 mm.

Die beiden Schenkel (9a) und (9b) des Federparallelogramms bestehen wieder aus dem Material CFK mit einen negativem thermischen Ausdehnungskoeffizienten von -0,8 · $10^{-6}$ $K^{-1}$ in Richtung der Strecke (B). Die zu berücksichtigende Länge L11 beträgt 186 mm.

Einen Beitrag liefern nun noch die Stahlfedern (19a) und (19b) mit ihrer effektiven Länge L12 von je 10 mm zwischen den Befestigungspunkten.

Damit ergibt sich für die thermische Dehnung l2' des zweiten Gelenkarms:

$$l2' = L11 \cdot \alpha1 + 2 \cdot L12 \cdot \alpha2 + (L4 + L14) \cdot \alpha4. \tag{3}$$

Mit den für dieses Beispiel maßgeblichen Werten erhält man

$$l2' = (186 \cdot -0,8 + 2 \cdot 10 \cdot 10 + (13,6 + 20,5) \cdot 1,5) \cdot$$

$$10^{-6} \text{ mm K}^{-1} = 95,5 \cdot 10^{-6} \text{ mm K}^{-1} \tag{4}$$

Über einen Temperaturbereich von 30 K beträgt hier die thermische Dehnung der Strecke (B) zwischen der Drehachse (8) und der Tasterachse (10) insgesamt 2,86μm, was im Rahmen der Meßgenauigkeit des Geräts ebenfalls noch vernachlässigbar ist. Ein noch etwas besseres Ergebnis läßt sich durch Verkürzen der Biegefedern (19) aus Stahl bzw. Verlängern der CFK-Teile (9a/9b) erreichen.

Das die beiden Schenkel (5a) und (5b) verbindende Mittelteil des ersten Schwenkarms (5) besteht ebenfalls aus CFK, allerdings ist dieses Mittelteil bezüglich der Lage der den Kunststoff verstärkenden Kohlefasern so gewickelt, daß sich bei gleichzeitiger guter Stabilität des Teils in Richtung der ersten Schwenkachse (6) ein positiver thermischer Ausdehnungskoeffizient $\alpha1'$ von ca. +1 · $10^{-6}$/K ergibt. Damit besitzt der Abstand der die beiden Lager für die Welle (15) tragenden Schenkel (5a) und (5b) des ersten Schwenkarms größenordnungsmäßig das gleiche thermische Ausdehnungsverhalten wie die Welle (15) aus Keramikmaterial, so daß auch an dieser Stelle keine zerstörenden Kräfte infolge thermischer Ausdehnung auf die Lager der Welle (15) ausgeübt werden.

**Patentansprüche**

1. Koordinatenmeßgerät, dessen Taster (11/12) über hintereinandergeschaltete Drehachsen (6,8) beweglich gelagert ist, wobei die den Abstand (A) der Drehachsen (6,8) bestimmenden Bauteile (14,14a,5;15) aus Materialien bestehen, von denen mindestens eines (14,14a,15) einen positiven und mindestens eines (5) einen negativen thermischen Ausdehnungskoeffizienten besitzt und/oder die den Abstand (B) einer Drehachse (8) zur Tasterachse (10) bestimmenden Bauteile (15,15a,9,19a,19b,13) des Geräts aus Materialien bestehen, von denen mindestens eines (15,15a,19a,19b,13) einen positiven und mindestens eines (9) einen negativen thermischen Ausdehnungskoeffizienten besitzt.

2. Koordinatenmeßgerät nach Anspruch 1, wobei die wirksamen Längen der Bauteile und ihre thermischen Ausdehnungskoeffizienten so gewählt sind, daß der Abstand (A) der Drehachsen (6,8) bzw. der Abstand (B) einer Drehachse (8) zur Tasterachse (10) nur geringfügige bzw. im Rahmen der Meßgenauigkeit des Geräts vernachlässigbare thermische Längenänderungen erfahren.

3. Koordinatenmeßgerät nach einem der Ansprüche 1-2, wobei mindestens eines (5,9) der Bauteile aus einem faserverstärkten Kunststoff (CFK) besteht, der in Richtung des Abstandes (A) der Drehachsen (6,8) bzw. des Abstandes (B) einer Drehachse (8) zur Tasterachse (10) einen negativen thermischen Ausdehnungskoeffizienten ($\alpha1$) besitzt.

4. Koordinatenmeßgerät nach Anspruch 3, wobei andere der Bauteile aus Stahl (14,19a,19b) und/oder Aluminium (14a) und/oder Keramikmaterial (13,15,15a) bestehen.

5. Koordinatenmeßgerät nach Anspruch 1, wobei die Wellen (14,15) aus einem Material bestehen, dessen thermischer Ausdehnungskoeffizient in Achsrichtung (6,8) die gleiche Größenordnung besitzt wie der des die Drehlager für Wellen tragenden Teils (4,5).

**Claims**

1. Coordinate measuring apparatus, the probe (11/12) of which is mounted movably by means of pivot axes (6, 8) arranged one behind the other, the components (14, 14a, 5; 15) which determine the spacing (A) of the pivot axes (6, 8) consisting of materials of which at least one (14, 14a, 15) has a positive coefficient of thermal expansion and at least one (5) has a negative coefficient of thermal expansion and/or the components (15, 15a, 9, 19a, 19b, 13) of the apparatus which determine the spacing (B) of a pivot axis (8) from the probe axis (10) consisting of materials of which at least one (15, 15a, 19a, 19b, 13) has a positive coefficient of thermal expansion and at least one (9) has a negative coefficient of thermal expansion.

2. Coordinate measuring apparatus according to Claim 1, the effective lengths of the components and their coefficients of thermal expansion being chosen such that the spacing (A) of the pivot axes (6, 8) and the spacing (B) of a pivot axis (8) from the probe axis (10) undergo thermal changes in length which are only slight or negligible within the measuring accuracy of the apparatus.

3. Coordinate measuring apparatus according to either of Claims 1-2, at least one (5, 9) of the components consisting of a fibre-reinforced plastic (CFRP) which has a negative coefficient of thermal expansion ($\alpha$1) in the direction of the spacing (A) of the pivot axes (6, 8) and the spacing (B) of a pivot axis (8) from the probe axis (10).

4. Coordinate measuring apparatus according to Claim 3, others of the components consisting of steel (14, 19a, 19b) and/or aluminium (14a) and/or ceramic material (13, 15, 15a).

5. Coordinate measuring apparatus according to Claim 1, the shafts (14, 15) consisting of a material of which the coefficient of thermal expansion in the axial direction (6, 8) has the same order of magnitude as that of the part (4, 5) carrying the pivot bearings for shafts.

**Revendications**

1. Instrument de mesure de coordonnées, dont la tête de mesure (11/12) est montée mobile sur des axes de rotation (6, 8) montés les uns derrière les autres, les composants (14, 14a, 5 ; 15) déterminant la distance (A) entre les axes de rotation (6, 8) se composant de matériaux dont au moins un (14, 14a, 15) possède un coefficient de dilatation thermique positif et au moins un (5) possède un coefficient de dilatation thermique négatif, et/ou les composants (15, 15a, 9, 19a, 19b, 13) de l'instrument déterminant la distance (B) entre un axe de rotation (8) et l'axe (10) de la tête de mesure se composant de matériaux dont au moins un (15, 15a, 19a, 19b, 13) possède un coefficient de dilatation thermique positif et au moins un (9) possède un coefficient de dilatation thermique négatif.

2. Instrument de mesure de coordonnées selon la revendication 1, dans lequel les longueurs effectives des composants et leurs coefficients de dilatation thermique sont choisis de telle sorte que la distance (A) entre les axes de rotation (6, 8), respectivement la distance (B) entre un axe de rotation (8) et l'axe (10) de la tête de mesure ne subisse que des variations de longueur thermiques très faibles ou négligeables dans le cadre de la précision de mesure de l'instrument.

3. Instrument de mesure de coordonnées selon l'une quelconque des revendications 1 à 2, dans lequel au moins l'un (5, 9) des composants se compose d'un plastique renforcé par des fibres (CFK) qui possède, dans la direction de la distance (A) entre les axes de rotation (6, 8), respectivement de la distance (B) entre un axe de rotation (8) et l'axe (10) de la tête de mesure, un coefficient de dilatation thermique négatif ($\alpha$1).

4. Instrument de mesure de coordonnées selon la revendication 3, dans lequel d'autres des composants se composent d'acier (14, 19a, 19b) et/ou d'aluminium (14a) et/ou d'un matériau en céramique (13, 15, 15a).

5. Instrument de mesure de coordonnées selon la revendication 1, dans lequel les arbres (14, 15) se composent d'un matériau dont le coefficient de dilatation thermique dans la direction axiale (6, 8) possède le même ordre de grandeur que celui de la partie (4, 5) portant le palier rotatif pour les arbres.

FIG. 1

EP 0 763 709 B1

# FIG. 2

# FIG. 3